# EUROPEAN PATENT APPLICATION

(11) **EP 2 469 379 A2**
(43) Date of publication of application: **27.06.2012**
(21) Application number: 11192526.9
(22) Date of filing: 08.12.2011
(51) Int. Cl.: G06F 3/041, G06F 3/042

(54) **Touch-sensing display device**

(30) Priority: 22.12.2010 US 201061425974 P; 22.11.2011 US 201113301803
(71) Applicant: Integrated Digital Technologies, Inc., Hsinchu Science Park, Taipei (TW)
(72) Inventor: Yuan, Chih-Ming, 300 Hsinchu City (TW); Liaw, Shen-Tai, 300 Hsinchu City (TW); Hwang, Nae-Jye, Hsinchu Science Park (TW)
(74) Representative: Becker Kurig Straus

(57) **Abstract**

A touch-sensing display device including a touch-sensing panel and a touch-sensing light source therearound is provided. The touch-sensing panel has a display surface and includes a pixel array including pixel structures and a display medium disposed on the pixel array. One pixel structure includes a scan line, a data line intersected with the scan line, an active element electrically connected to the scan line and the data line, a pixel electrode electrically connected to the active element, a capacitor electrode line electrically coupled with the pixel electrode, a readout line parallel to the data line, and a sensing element electrically connected to the scan line and the readout line and having a sensing surface facing the display surface. The touch-sensing light source provides a touch-sensing light to form a uniformed light field at the display surface. And at least one filter layer is provided above the sensing element.

## Description

### BACKGROUND OF THE INVENTION

### 1. Field of the Invention

The present invention generally relates to a touch-sensing display device, in particular, to a touch-sensing display device having optical sensing elements.

### 2. Description of Related Art

Along with the rapid advancement of information and wireless communication technologies and the widespread of information appliances, the input elements of many information products have been changed from conventional keyboards and mice to touch panels in order to achieve a more personalized operation experience. Presently, touch panels are generally categorized into resistive touch panels, capacitive touch panels, surface acoustic wave (SAW) touch panels, electromagnetic touch panels, and optical touch panels, etc.

Taking an optical touch panel as an example, the optical touch panel can be operated in a reflection sensing mode or a shadow sensing mode. In the reflection sensing mode, when the user touches the touch surface with his or her finger, the light on the surface of the optical touch panel can be scattered and reflected. Thus, the photo sensor disposed below the touch point receives the reflected and scattered light to generate a sensing signal. The optical touch panel can determine the touch position on the optical touch panel according to the sensing signal. However, in addition to the reflected and scattered light of the touch position, the photo sensor can also receive the ambient light. Therefore, such an optical touch panel may produce a misoperation when the ambient light is too intensive.

Alternately, in the shadow sensing mode, when the user touches the touch surface with his or her finger, the light incident on the touch sensor can be shielded. Thus, the photo sensor disposed below the touch point senses the shadow to generate a sensing signal. The optical touch panel can determine the touch position on the optical touch panel according to the sensing signal. However, such an optical touch panel may produce a misoperation when the ambient light is too weak because the touch sensor can not correctly determine the shadow in a dark condition.

### SUMMARY OF THE INVENTION

Accordingly, the invention is directed to a touch-sensing display device having desirable touch-sensing sensitivity.

According to an embodiment of the invention, a touch-sensing display device including a touch-sensing panel and a touch-sensing light source is provided. The touch-sensing panel has a display surface and includes a pixel array and a display medium disposed on the pixel array, wherein the pixel array includes a plurality of pixel structures. At least one of the pixel structures includes a scan line, a data line, an active element, a pixel electrode, a capacitor electrode line, a readout line, and a sensing element. The scan line and the data line are intersected with each other. The active element is electrically connected to the scan line and the data line. The pixel electrode is electrically connected to the active element. The capacitor electrode line is electrically coupled with the pixel electrode. The readout line is disposed parallel to the data line. The sensing element is electrically connected to the scan line and the readout line, wherein the sensing element is connected to an adjacent capacitor electrode line and a sensing surface of the sensing element faces the display surface. The touch-sensing light source is disposed around the touch-sensing panel and providing a touch-sensing light to form a uniformed light field at the display surface.

According to an embodiment of the invention, the touch-sensing display device further includes a backlight unit disposed at a back surface of the touch-sensing panel opposite to the display surface and the backlight unit emits a display light toward the display surface. In one example, the touch-sensing light source is disposed in the backlight unit for emitting the touch-sensing light toward the display surface.

According to an embodiment of the invention, a wavelength of the display light is different from a wavelength of the touch-sensing light.

According to an embodiment of the invention, the touch-sensing light is an invisible light.

According to an embodiment of the invention, the touch-sensing light source is disposed in front of the display surface and emits the touch-sensing light toward the display surface to form the uniformed light field at the display surface. In one example, the touch-sensing light source includes at least two light emitting diodes surrounding the touch-sensing panel. In an alternative example, the touch-sensing light source can include a laser light source and a lens in front of the laser light source and the touch-sensing light source is capable of providing the touch-sensing light with a shape of a curtain substantially parallel to the display surface.

According to an embodiment of the invention, the touch-sensing light source includes a light emitting source and a light guide, the light emitting source is located beside the light guide and emits the touch-sensing light, and the touch-sensing light is substantially transmitted inside the light guide by a total inner reflection effect of the light guide to form the uniform light field.

According to an embodiment of the invention, the touch-sensing light source includes a light emitting source and a light diffuser, the light emitting source is located beside the light diffuser and emits the touch-sensing light toward the light diffuser, and the touch-sensing light is substantially scattered outward from the light diffuser to form the uniform light field. In one example, the light diffuser has a plurality of diffusing particles distributed therein.

According to an embodiment of the invention, the touch-sensing light source is disposed beside the display medium and emits the touch-sensing light toward the display medium to form the uniformed light field.

According to an embodiment of the invention, the touch-sensing panel further includes a filter layer and the display medium is disposed between the filter layer and the pixel array. Specifically, the filter layer can include a red filter, a green filter, and a blue filter alternatively arranged above the pixel electrodes, wherein at least one of the red filter, the green filter, and the blue filter can be further located above the sensing element of each pixel structure. Alternatively, the filter layer can include a filter capable of blocking the visible light.

In view of the above, the touch-sensing display device is configured with a touch-sensing light source for forming a uniformed light field at the display surface. Therefore, no matter the touch-sensing display device is used in a dark environment or in a bright environment, the sensing element integrated in the touch-sensing panel can correctly sense the touch of a user and generate the corresponding sensing signals. That is to say, the touch-sensing display device has good touch-sensing sensitivity.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

FIG. 1A schematically illustrates a touch-sensing display device according to a first embodiment of the invention.

FIG. 1B is a schematic equivalent circuit diagram of the pixel array of the touch-sensing display device depicted in FIG. 1A.

FIG. 2 schematically illustrates a touch-sensing display device according to a second embodiment of the invention.

FIG. 3 schematically illustrates a touch-sensing display device according to a third embodiment of the invention.

FIG. 4 schematically illustrates a touch-sensing display device according to a fourth embodiment of the invention.

FIG. 5 schematically illustrates a touch-sensing display device according to a fifth embodiment of the invention.

FIG. 6 schematically illustrates a touch-sensing display device according to a sixth embodiment of the present invention.

FIG. 7 shows the absorption rate of the photo sensor element formed by a thin film transistor having an amorphous silicon channel.

FIG. 8 schematically illustrates a touch-sensing panel according to a seventh embodiment of the invention.

FIG. 9A shows the light transmittance of the red color filter.

FIG. 9B shows the absorption rate of the photo sensor element when the red color filter is configured above the photo sensor element.

FIG. 10 schematically illustrates a touch-sensing panel according to an eighth embodiment of the invention.

FIG. 11A shows the light transmittance of the stack of the red color filter and the blue color filter.

FIG. 11B shows the absorption rate of the photo sensor element when the stack of the red color filter and the blue color filter is configured above the photo sensor element.

FIG. 12A shows the light transmittance of the stack of the red color filter and the green color filter.

FIG. 12B shows the absorption rate of the photo sensor element when the stack of the red color filter and the green color filter is configured above the photo sensor element.

FIG. 13 schematically illustrates a touch-sensing panel according to a ninth embodiment of the invention.

FIG. 14A shows the light transmittance of the stack of the red color filter, the green color filter, and the blue color filter.

FIG. 14B shows the absorption rate of the photo sensor element when the stack of the red color filter, the green color filter, and the blue color filter is configured above the photo sensor element.

### DESCRIPTION OF THE EMBODIMENTS

Reference will now be made in detail to the present embodiments of the invention, examples of which are illustrated in the accompanying drawings. Wherever possible, the same reference numbers are used in the drawings and the description to refer to the same or like parts.

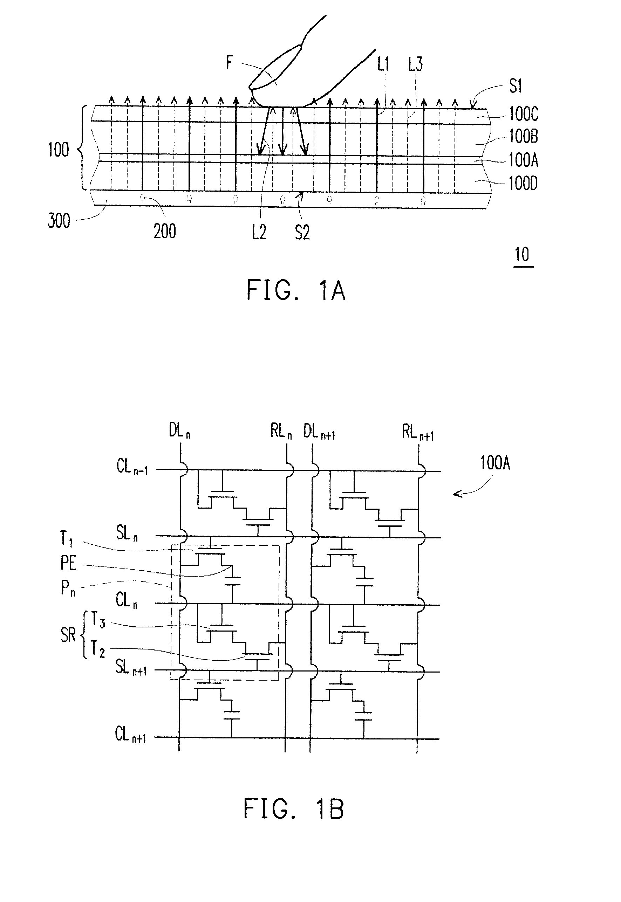

FIG. 1A schematically illustrates a touch-sensing display device according to a first embodiment of the invention and FIG. 1B is a schematic equivalent circuit diagram of the pixel array of the touch-sensing display device depicted in FIG. 1A. Referring to FIG. 1A and FIG. 1B, a touch-sensing display device 10 at least includes a touch-sensing panel 100 and a touch-sensing light source 200. The touch-sensing panel 100 has a display surface S1 and includes a pixel array 100A and a display medium 100B disposed on the pixel array 100A. The touch-sensing light source 200 is disposed around the touch-sensing panel 100 and providing a touch-sensing light L1 to form a uniformed light field at the display surface S1. Specifically, the display medium 100B can be sandwiched between two substrates 100C and 100D and the pixel array 100A is disposed on the substrate 100D for driving the display medium 100B.

In the present embodiment, , the pixel array 100A includes a plurality of pixel structures Pn and at least one of the pixel structures Pn includes a scan line SLn, a data line DLn, an active element T1, a pixel electrode PE, a capacitor electrode line CLn, a readout line RLn, and a sensing element SR. The scan line SLn and the data line DLn are intersected with each other. The active element T1 is electrically connected to the scan line SLn and the data line DLn. The pixel electrode PE is electrically connected to the active element T1. The capacitor electrode line CLn is electrically coupled with the pixel electrode PE to form the storage capacitor Cₐ. The readout line RLn is disposed parallel to the data line DLn. The sensing element SR is electrically connected to the scan line SLn and the readout line RLn, wherein the sensing element SR is connected to the capacitor electrode line CLn and a sensing surface (not shown) of the sensing element SR substantially faces the display surface S1.

More specifically, the pixel array comprises a plurality of scan lines (SL₁, ..., SLₙ₋₁, SLₙ, SLₙ₊₁...), a plurality of data lines (DL₁, ..., DLₙ₋₁, DLₙ, DLₙ₊₁...), a plurality of readout lines (RL₁, ..., RLₙ₋₁, RLₙ, RLₙ₊₁...) and a plurality of capacitor electrode lines (CL₁, ..., CLₙ₋₁, CLₙ, CLₙ₊₁...). In the embodiment, each pixel structure Pₙ has one active element T₁, one pixel electrode PE, and one sensing element SR. However, the present invention does not limit to this embodiment and does not limit the number of the active element T₁, the number of the pixel electrode PE, and the number of the sensing element SR. According to another embodiment (not shown), each pixel structure may have the active element and the pixel electrode while the sensing elements are only disposed in parts of the pixel structures. That is to say, not every pixel structure has the sensing elements and thus the number of the sensing elements can be less than the number of the pixel structures.

Furthermore, the sensing element SR can be an optical sensor, the sensing element SR comprises a switch element T₂ and a photo sensor element T₃. The switch element T₂ is electrically connected to the scan line SLₙ₊₁ and the readout line RLₙ, while the photo sensor element T₃ is electrically connected to the switch element T₂ and connected with the adjacent capacitor electrode line CLₙ. The switch element T₂ of the sensing element SR in the pixel structure Pₙ is connected to the adjacent scan line SLₙ₊₁, rather than connected to the scan line SLₙ which electrically couples with the pixel electrode PE of the pixel structure Pₙ. Therefore, when the active element T₁ of the pixel structure Pₙ is turned-on, the sensing element SR in the pixel structure Pₙ is not affected because the switch element T₂ of the sensing element SR is not connected to the said scan line SLₙ.

As shown in FIG. 1A and FIG. 1B, when a user touches the display surface S 1 of the touch-sensing panel 100 through an object such as his or her finger F, the touch-sensing light L1 is scattered and reflected by the finger F. The photo sensor element T₃ of one sensing element SR under the touch position of the Finger F would generate the photo-current due to the reflected and scattered touch-sensing light L2. Once the switch element T₂ is turned on, the photo-current generated in the photo sensor element T₃ can be immediately transmitted through the switch element T₃ and the readout line RLₙ can directly and immediately read the photo-current out. Accordingly, the sensing element SR do not have any component for charge storage, such as a capacitor, which facilitates a simple sensor design. In addition, the sensing elements SR controlled by the same scan line SLₙ₊₁ are respectively connected to different readout line RLₙ, RLₙ₊₁..., so that the sensing signals generated by sensing elements SR controlled by the same scan line SLₙ₊₁ are readout individually, which prevents from the signal interference between the sensing elements SR controlled by the same scan line SLₙ₊₁ and further enhance the sensitivity of the sensing elements SR.

In the present embodiment, the display medium 100B can be liquid crystals which is not a self luminescence material. Therefore, the touch-sensing display device 10 can further include a backlight unit 300 disposed at a back surface S2 of the touch-sensing panel 100 opposite to the display surface S1 and the backlight unit 300 is suitable for emitting a display light L3 passing through the display surface S1. Furthermore, the number of the touch-sensing light source 200 according to the present embodiment can be multiple and the touch-sensing light sources 200 are integrated inside the backlight unit 300. For example, the touch-sensing light sources 200 can be a plurality of light emitting diodes configured in the backlight unit 300 and arranged in an array when the backlight unit 300 is a direct type backlight unit, but the invention is not limited thereto. In an alternative embodiment, the touch-sensing light sources 200 can be arranged in a line and located at a side of the backlight unit 300 when the backlight unit 300 is a side type backlight unit. Certainly, the touch-sensing light sources 200 can be arranged among the light sources of the backlight unit 300.

It is noted that the touch-sensing light source 200 can steadily provide the touch-sensing light L1 during the touch-sensing function is operated, such that the sensing element SR can work normally no matter the ambient light is intensive or weak. In addition, for achieving desirable sensitivity, a wavelength of touch-sensing light L1 can be different from a wavelength of the display light L3 and the photo sensor element T₃ in the sensing element SR can be designed to have better sensitivity to the touch-sensing light L1. Alternatively, the touch-sensing light L1 can be an invisible light, e.g. an infrared light. However, the wavelength of the touch-sensing light L1 should not be particularly limited according to the scope of the invention.

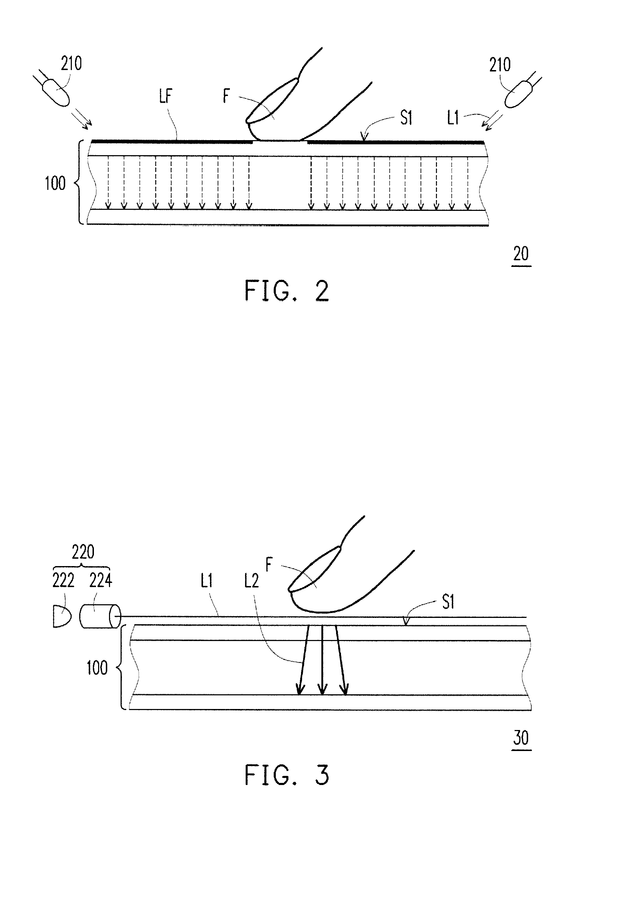

FIG. 2 schematically illustrates a touch-sensing display device according to a second embodiment of the invention. Referring to FIG. 2, the components of the touch-sensing display device 20 is substantially similar to those of the touch-sensing display device 10 of the first embodiment. The difference between the touch-sensing display device 10 and the touch-sensing display device 20 mainly lies in the configuration of the touch-sensing light source and other components of the touch-sensing display device 20 can be referred to those described in the first embodiment. Specifically, in the present embodiment, the touch-sensing light source 210 of the touch-sensing display device 20 is disposed in front of the display surface S1 of the touch-sensing panel 100. The touch-sensing light source 210 can be two or more light emitting diodes surrounding the touch-sensing panel 100.

In the present embodiment, the touch-sensing light source 210 is located in front of the display surface S1 and emits the touch-sensing light L1 toward the display surface S1 to form the uniform light field LF at the display surface S1. When the finger F of the user touches the touch-sensing display device 20, the touch-sensing light L1 can be shielded at the touch position and the uniformed light field LF is disturbed. Herein, the sensing element (not shown in FIG. 2 but can be referred to that depicted in FIG. 1B) integrated in the touch-sensing panel 100 can sense a shadow at the touch position and generates the corresponding touch signal. That is to say, the touch-sensing display device 20 can have the shadow sensing mode touch-sensing function.

FIG. 3 schematically illustrates a touch-sensing display device according to a third embodiment of the invention. Referring to FIG. 3, the touch-sensing display device 30 is substantially similar to the touch-sensing display device 20 of the second embodiment. The difference between the touch-sensing display device 30 and the touch-sensing display device 20 mainly lies in the type of the touch-sensing light source and other components of the touch-sensing display device 30 can be referred to those described in the first and the second embodiments. Specifically, in the present embodiment, the touch-sensing light source 220 of the touch-sensing display device 30 is disposed in front of the display surface S1 of the touch-sensing panel 100 and located beside the touch-sensing panel 100. Herein, the touch-sensing light source 220 includes a laser light source 222 and a lens 224 in front of the laser light source 222. Alternately, the touch-sensing light source 220 can include at least one light emitting diode (LED). The touch-sensing light source 220 is capable of providing the touch-sensing light L1 with a shape of a curtain substantially parallel to the display surface S 1.

In the present embodiment, when the finger F of the user touches the touch-sensing display device 30, the touch-sensing light L1 can be scattered and reflected at the touch position. Herein, the sensing element (not shown in FIG. 3 but can be referred to that depicted in FIG. 1B) integrated in the touch-sensing panel 100 can sense the reflected and scattered touch-sensing light L2 at the touch position and generates the corresponding touch signal. That is to say, the touch-sensing display device 30 can have the reflection sensing mode touch-sensing function.

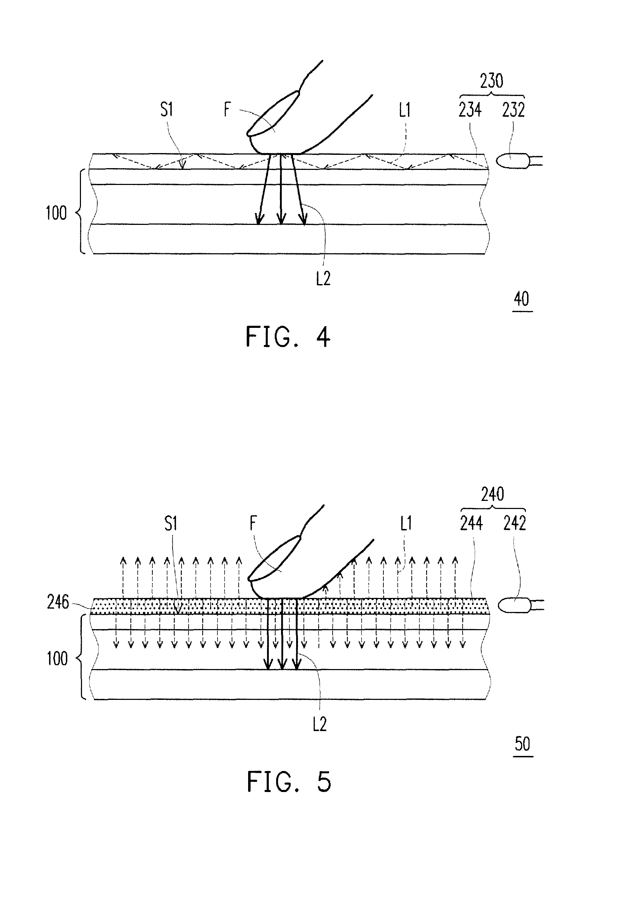

FIG. 4 schematically illustrates a touch-sensing display device according to a fourth embodiment of the invention. Referring to FIG. 4, the touch-sensing display device 40 is substantially similar to the touch-sensing display device 20 of the second embodiment. The difference between the touch-sensing display device 40 and the touch-sensing display device 20 mainly lies in the configuration of the touch-sensing light source and other components of the touch-sensing display device 40 can be referred to those described in the first and the second embodiments. Specifically, in the present embodiment, the touch-sensing light source 230 of the touch-sensing display device 30 includes a light emitting source 232 and a light guide 234 located above the touch-sensing panel 100. The light emitting source 232 is located beside the light guide 234 and emits the touch-sensing light L1, and the touch-sensing light L1 is substantially transmitted inside the light guide 234 by a total internal reflection (TIR) effect of the light guide 234 to form the uniform light field at the display surface S1 of the touch-sensing panel 100. That is to say, the light guide 234 has particular refraction index so that the touch-sensing light L1 can be subjected to the TIR effect in the light guide 234.

In the present embodiment, when the finger F of the user touches the touch-sensing display device 40, the TIR effect of the light guide 234 with respect to the touch-sensing light L1 can be disturbed and the touch-sensing light L1 can be thus scattered and emitted outward from the light guide 234 at the touch position. Further, the outward emitted touch-sensing light L1 can be scattered and reflected by the finger F. Herein, the sensing element (not shown in FIG. 4 but can be referred to that depicted in FIG. 1B) integrated in the touch-sensing panel 100 can sense the scattered touch-sensing light L2 at the touch position and generates the corresponding touch signal. That is to say, the touch-sensing display device 40 can have the reflection sensing mode touch-sensing function.

FIG. 5 schematically illustrates a touch-sensing display device according to a fifth embodiment of the invention. Referring to FIG. 5, the touch-sensing display device 50 is substantially similar to the touch-sensing display device 40 of the fourth embodiment. The difference between the touch-sensing display device 50 and the touch-sensing display device 40 mainly lies in the configuration of the touch-sensing light source and other components of the touch-sensing display device 50 can be referred to those described in the first, the second, and the fourth embodiments. Specifically, in the present embodiment, the touch-sensing light source 240 of the touch-sensing display device 50 includes a light emitting source 242 and a light diffuser 244. The light diffuser 244 is located above the display surface S1 of the touch-sensing panel 100. The light emitting source 242 is located beside the light diffuser 244 and emits the touch-sensing light L1 toward the light diffuser 244, and the touch-sensing light L1 is substantially scattered outward from the light diffuser 244 to form the uniform light field at the display surface S1 of the touch-sensing panel 100. In one example, the light diffuser 244 can have a plurality of diffusing particles 246 distributed therein, but the invention is not limited thereto.

In the present embodiment, when the finger F of the user touches the touch-sensing display device 50, the touch-sensing light L1 emitted away from the touch-sensing panel 100 can be scattered and reflected. Thus, the intensity of the touch-sensing light L1 emitting toward the inner of the touch-sensing panel 100 and irradiating on the sensing element (not shown in FIG. 5 but can be referred to that depicted in FIG. 1B) integrated in the touch-sensing panel 100 can be enhanced. Accordingly, the sensing element generates the corresponding touch signal based on the enhanced intensity of the received touch-sensing light L1 to perform the touch-sensing activity. That is to say, the touch-sensing display device 50 can have the reflection sensing mode touch-sensing function.

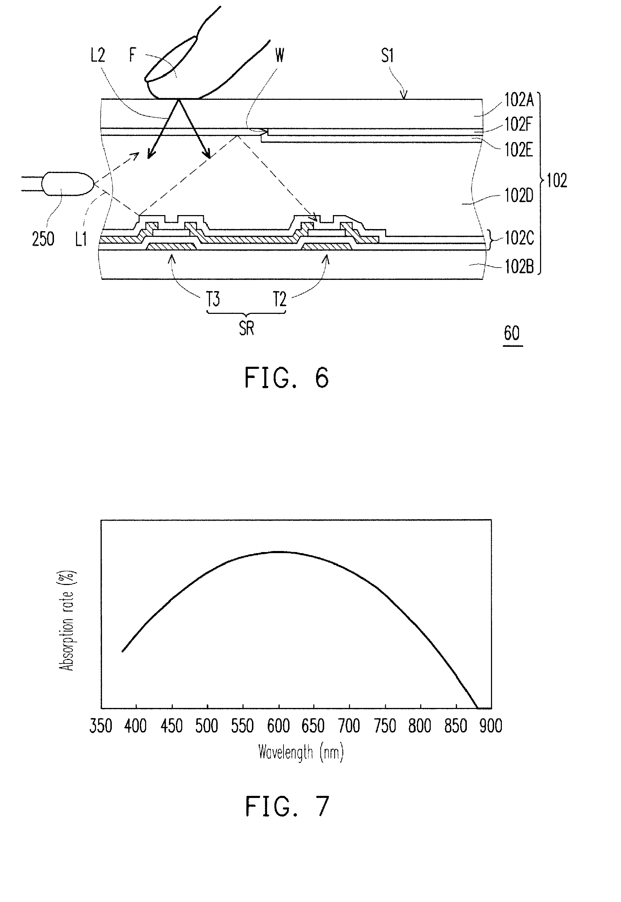

FIG. 6 schematically illustrates a touch-sensing display device according to a sixth embodiment of the present invention. Referring to FIG. 6, the touch-sensing display device 60 includes the touch-sensing panel 102 and the touch-sensing light source 250. The touch-sensing panel 102 includes two substrates 102A and 102B, a pixel array 102C, a display medium 102D, an opposite electrode 102E, and a color filter layer 102F. The display medium 102D is disposed between the substrates 102A and 102B and can be, but not limited to, a liquid crystal layer. The pixel array 102C is disposed on the substrate 102B to drive the display medium 102D. The opposite electrode layer 102E is disposed on the substrate 102A and opposite to the pixel array 102C while the color filter layer 102F is located between the opposite electrode layer 102E and the substrate 102A. Herein, the pixel array 102C is substantially similar to the pixel array 100A in the first embodiment and the components of the pixel array 102C can be referred to those of the pixel array 100A while FIG. 6 merely schematically shows the switch element T2 and the photo sensor element T3 of the sensing element.

It is noted that in the present embodiment, the touch-sensing light source 250 is located beside the display medium 102D and emits the touch-sensing light L1 toward the display medium 102D. Herein, the pixel array 102C consisted of a plurality of components has uneven thickness so that the touch-sensing light L1 transmitted in the display medium 102D can be reflected and scattered by the pixel array 102C to form a uniformed light field at the display surface S1 of the touch-sensing panel 102. Once the finger F of the user touches the display surface S1, the touch-sensing light L1 can be reflected and scattered by the finger F and thus the sensing element (not shown in FIG. 6 but can be referred to that depicted in FIG. 1B) integrated in the touch-sensing panel 102 can receive the reflected and scattered touch-sensing light L2 for determining the touch position.

Generally, for allowing the reflected and scattered touch-sensing light L2 irradiate on the photo sensor element T3, the color filter 102F can have a transmittance window W above the photo sensor element T3. Accordingly, the reflected and scattered touch-sensing light L2 can directly pass through the substrate 102A and irradiate on the photo sensor element T3 so as to enhance the intensity of the reflected and scattered touch-sensing light L2 received by the photo sensor element T3. However, the ambient light can also pass through the substrate 102A and irradiate on the photo sensor element T3, which may cause a sensing error due to at least the following reasons.

FIG. 7 shows the absorption rate of the photo sensor element formed by a thin film transistor having an amorphous silicon channel. According to FIG. 7, the photo sensor element formed by a thin film transistor having an amorphous silicon channel has an uneven absorption rate with respect to different wavelength. Specifically, the absorption rate of the photo sensor element is relatively significant at the wavelength located from 500 nm to 700 nm. If the touch-sensing light is design as the infrared light, the sensitivity of the photo sensor element with respect to the infrared light is much poorer than the sensitivity of the photo sensor element with respect to the light with the wavelength located from 500 nm to 700 nm. Under this circumstance, the ambient light with the wavelength located from 500 nm to 700 nm irradiating on the photo sensor element may induce the photo-current in the photo sensor element, which can be improperly determined as a touch signal. Therefore, a sensing error may occur. For improve the sensitivity, the touch-sensing panel 102 can be exemplarily designed according to the following examples. It is noted that the following examples should by no means restrict the scope of the invention.

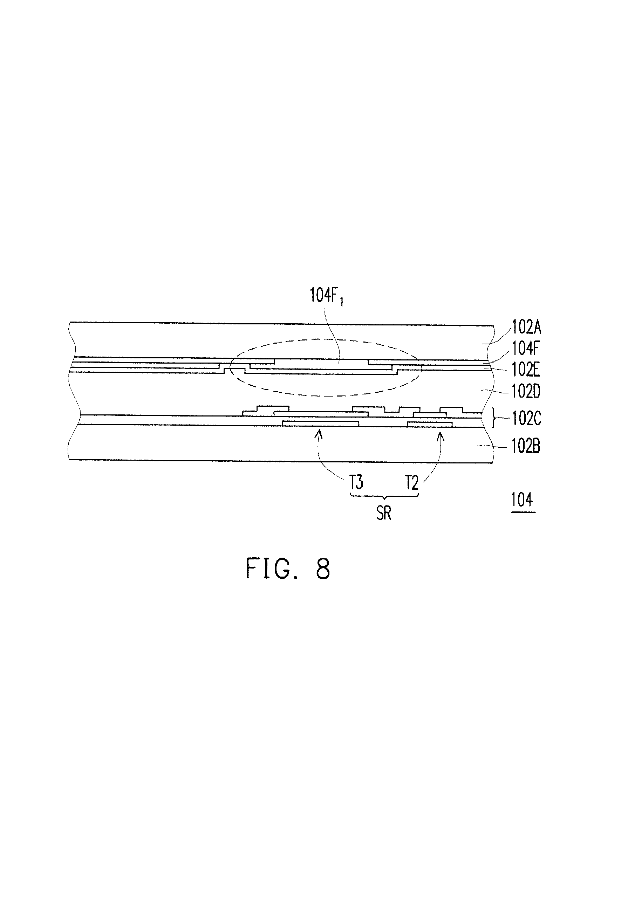

FIG. 8 schematically illustrates a touch-sensing panel according to a seventh embodiment of the invention. Referring to FIG. 8, the touch-sensing panel 104 is substantially similar to the touch-sensing panel 102 as shown in FIG. 6 and the same components are not iterated here. In the present embodiment, the color filter layer 104F of the touch-sensing panel 104 includes a red filter, a green filter, and a blue filter alternatively arranged above the pixel array 102C and at least one color filter 104F₁ is located above the photo sensor element T3 of the sensing element SR. That is to say, the transmittance window W shown in FIG. 6 is disposed with the color filter 104F₁.

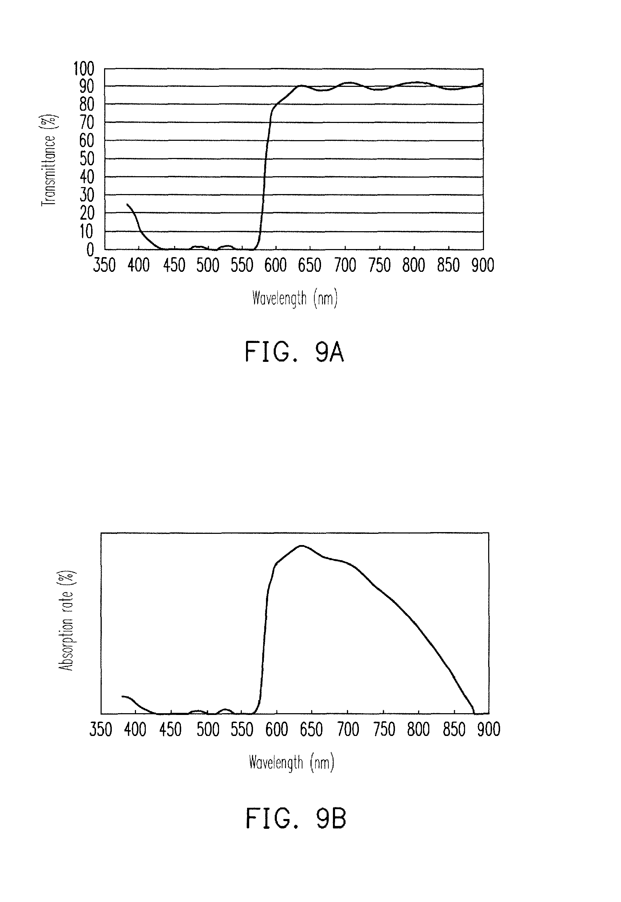

In the present embodiment, the color filter 104F₁ can be a red filter such that the light transmittance of the color filter 104F₁ is shown in FIG. 9A and the absorption rate of the photo sensor element T3 when the red color filter is configured above the photo sensor element is shown in FIG. 9B. It is noted that after disposing the color filter 104F₁ above the photo sensor element T3, the absorption rate of the photo sensor element T3 at the wavelength shorter than 570 nm is significantly reduced. As such, the sensitivity of the photo sensor element T3 is enhanced and is not easily influenced by the ambient light with the wavelength shorter than 570 nm. Accordingly, the sensing element SR can have desirable sensitivity.

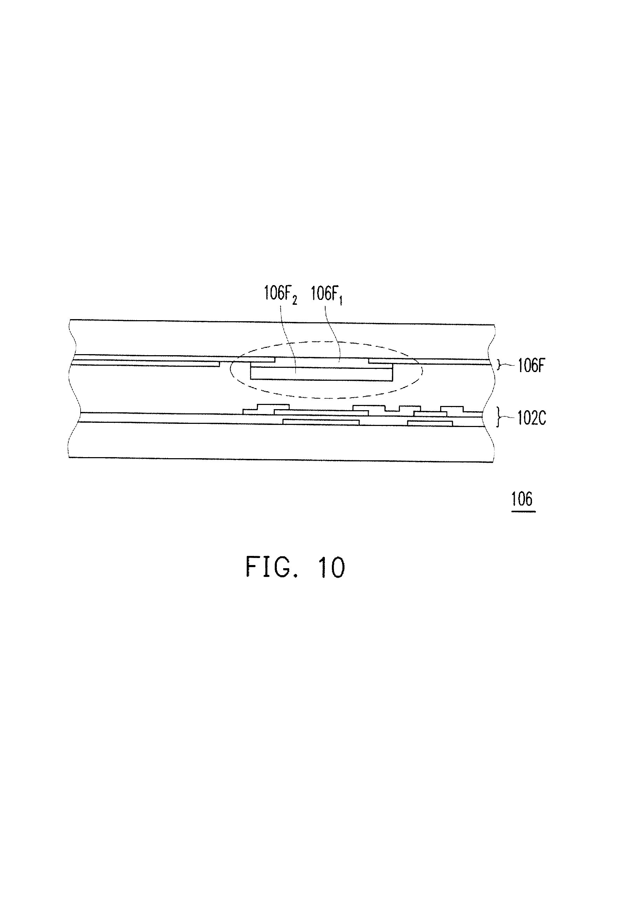

FIG. 10 schematically illustrates a touch-sensing panel according to an eighth embodiment of the invention. Referring to FIG. 10, the touch-sensing panel 106 is substantially similar to the touch-sensing panel 104 as shown in FIG. 8 and the same components are not iterated here. In the present embodiment, the color filter layer 106F of the touch-sensing panel 106 includes a red filter, a green filter, and a blue filter alternatively arranged above the pixel array 102C and two color filters 106F₁ and 106F₂ are stacked with each other and located above the photo sensor element T3 of the sensing element SR.

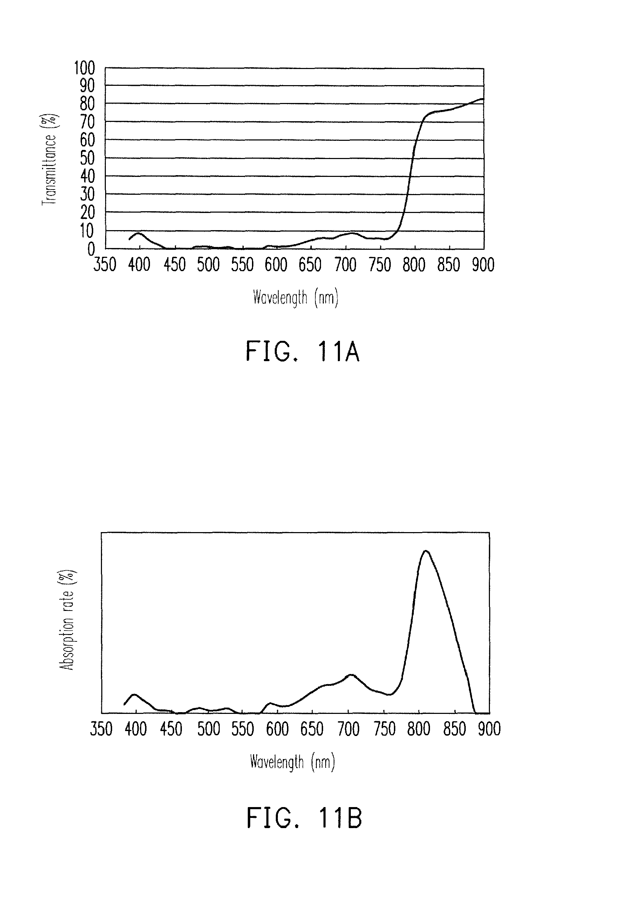

In the present embodiment, the color filter 106F₁ and the color filter 106F₂ can be respectively a red filter and a blue color filter such that the light transmittance of the stack of the color filter 106F₁ and the color filter 106F₂ is shown in FIG. 11A and the absorption rate of the photo sensor element T3 is shown in FIG. 11B when the stack of the red color filter and the blue color filter is configured above the photo sensor element. It is noted that after disposing the stack of the color filter 106F₁ and the color filter 106F₂ above the photo sensor element T3, the absorption rate of the photo sensor element T3 at the wavelength shorter than 750 nm is significantly reduced. As such, the sensitivity of the photo sensor element T3 is enhanced and is not easily influenced by the ambient light with the wavelength shorter than 750 nm.

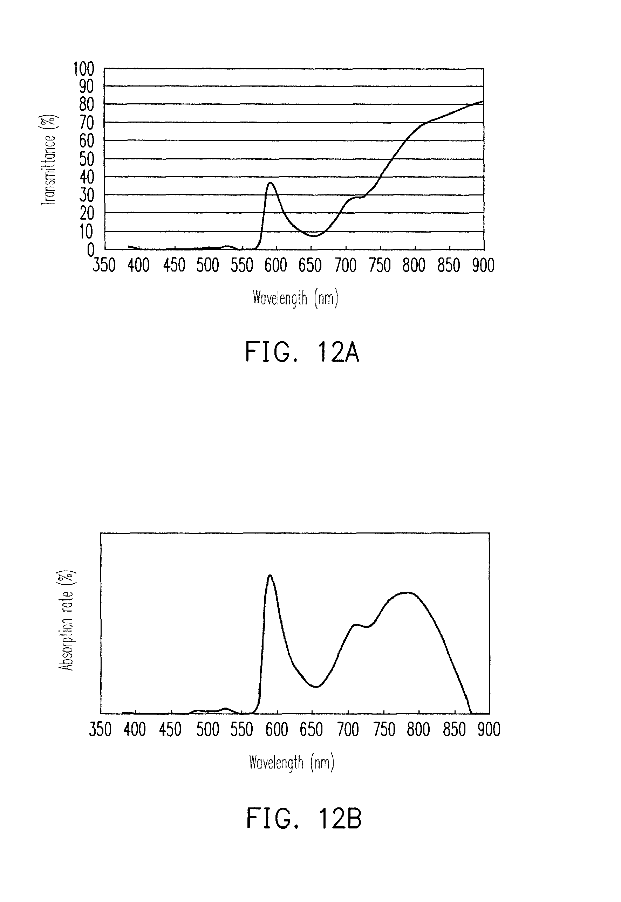

Alternatively, if the color filter 106F₁ and the color filter 106F₂ are respectively a red filter and a green color filter, the light transmittance of the stack of the color filter 106F₁ and the color filter 106F₂ is shown in FIG. 12A and the absorption rate of the photo sensor element T3 is shown in FIG. 12B. It is noted that after disposing the stack of the color filter 106F₁ and the color filter 106F₂ above the photo sensor element T3, the absorption rate of the photo sensor element T3 at the wavelength shorter than 570 nm and at the wavelength around 650 nm is significantly reduced. As such, the sensitivity of the photo sensor element T3 is enhanced and is not easily influenced by the ambient light with the wavelength shorter than 570 nm and with the wavelength around 650 nm.

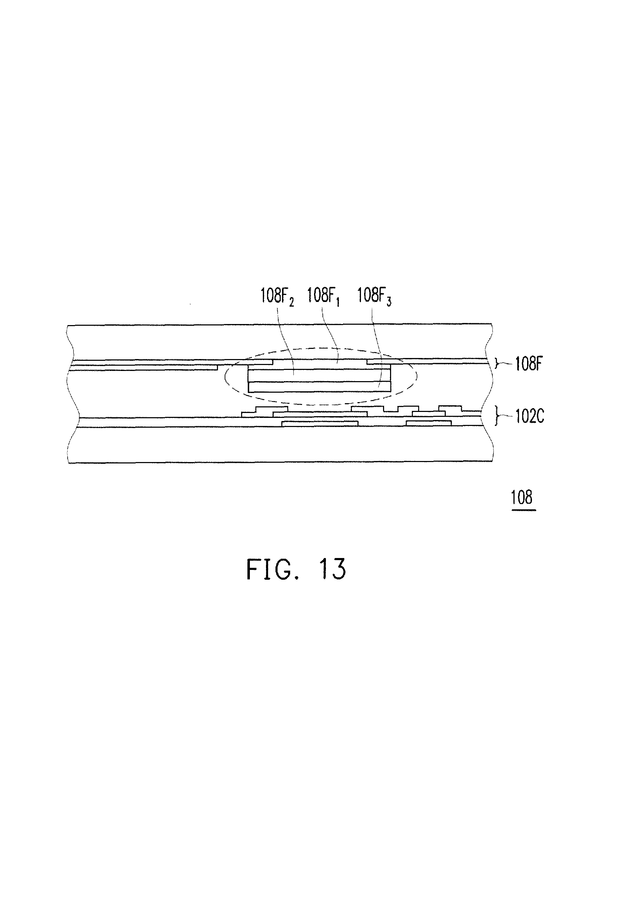

FIG. 13 schematically illustrates a touch-sensing panel according to a ninth embodiment of the invention. Referring to FIG. 13, the touch-sensing panel 108 is substantially similar to the touch-sensing panel 104 as shown in FIG. 8 and the same components therebetween are not iterated here. In the present embodiment, the color filter layer 108F of the touch-sensing panel 108 includes a red filter, a green filter, and a blue filter alternatively arranged above the pixel array 102C and three color filters 108F₁, 108F₂, and 108F₃ are stacked together and located above the photo sensor element T3 of the sensing element SR.

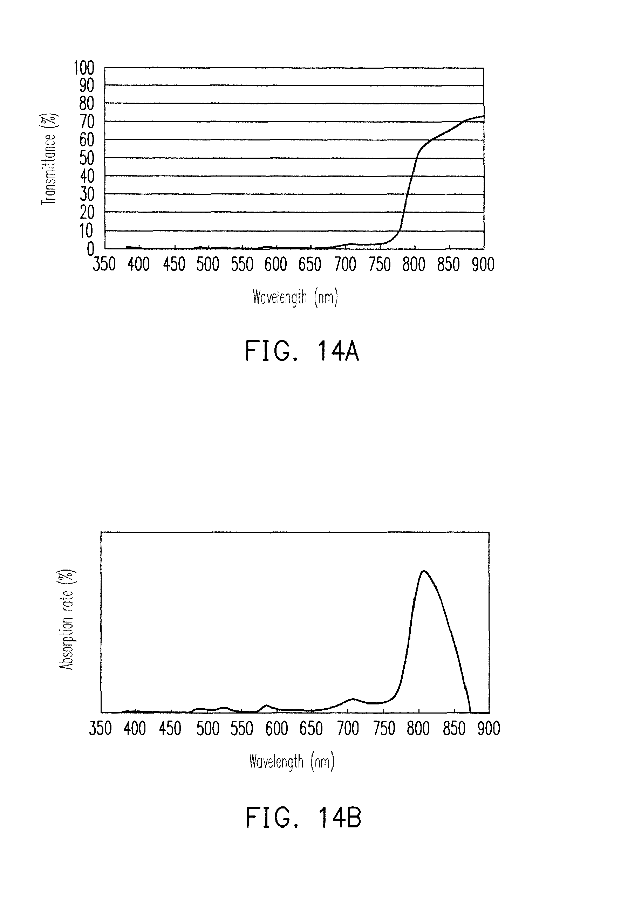

In the present embodiment, the color filters 108F₁, 108F₂, and 108F₃ can be respectively a red filter, a green filter, and a blue color filter such that the light transmittance of the stack of the color filters 108F₁, 108F₂, and 108F₃ is shown in FIG. 14A and the absorption rate of the photo sensor element T3 is shown in FIG. 14B. It is noted that after disposing the stack of the color filters 108F₁, 108F₂, and 108F₃ above the photo sensor element T3, the absorption rate of the photo sensor element T3 at the wavelength shorter than 750 nm is significantly reduced. As such, the sensitivity of the photo sensor element T3 is enhanced and is not easily influenced by the ambient light with the wavelength shorter than 750 nm.

It is noted that the abovementioned color filter located above the photo sensor element T3 is merely taken as an example, and not intent to limit the scope of the invention. In one embodiment, the filter located above the photo sensor element T3 can be formed by a material capable of blocking the light with the wavelength different from the wavelength of the touch-sensing light emitted by the touch-sensing light source. In further another example, the touch-sensing panel can include a black matrix located above the sensing surface of the sensing element T3, the black matrix may be capable of allowing only near infra-red to pass through. That is to say, the filter located above the photo sensor element T3 is not restricted by a color filter.

In light of the foregoing, the touch-sensing light source is configured around the touch-sensing panel for providing the required touch-sensing light so that the light received by the sensing element is prevented from being influenced by the ambient light. That is to say, no matter the ambient light is intensive or weak, the sensing element can have desirable sensitivity. In addition, the touch-sensing panel can have certain filter configured above the sensing element to further enhance the sensitivity of the sensing element, which is conducive to prevent from the sensing error.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

## Claims

1. A touch-sensing display device (10, 20, 30, 40, 50, 60) comprising:
a touch-sensing panel (100, 102, 104, 106, 108) having a display surface (S1) and comprising a pixel array (100A, 102C) and a display medium (100B, 102D) disposed on the pixel array (100A, 102C), wherein the pixel array (100A, 102C) comprises a plurality of pixel structures (Pₙ), and at least one of the pixel structures (Pₙ) comprises:
a scan line (SLn) and a data line (DLn), intersected with each other;
an active element (T1), electrically connected to the scan line (SLn) and the data line (DLn);
a pixel electrode (PE), electrically connected to the active element (T1);
a capacitor electrode line (CLn), electrically coupling with the pixel electrode (PE);
a readout line (RLn), disposed parallel to the data line(DLn);
a sensing element (SR), electrically connected to the scan line (SLn) and the readout line (RLn), wherein the sensing element (SR) is connected to the capacitor electrode line (CLn) and a sensing surface of the sensing element (SR) faces to the display surface (S1); and
at least one touch-sensing light source (200, 210, 220, 230, 240, 250) disposed around the touch-sensing panel (100, 102, 104, 106, 108) and providing a touch-sensing light (L1) to form a uniformed light field (LF) at the display surface (S 1) ; and
a backlight unit (300) disposed at a back surface (S2) of the touch-sensing panel (100, 102, 104, 106, 108) opposite to the display surface (S1) and the backlight unit (300) emitting a display light (L3) toward the display surface (S1).

2. The touch-sensing display device (10, 20, 30, 40, 50, 60) according to claim 1, wherein the touch-sensing light source (200, 210, 220, 230, 240, 250) is disposed in the backlight unit (300) for emitting the touch-sensing light (L1) toward the display surface (S1).

3. The touch-sensing display device (10, 20, 30, 40, 50, 60) according to any one of claims 1 to 2, wherein the touch-sensing light (L1) is an invisible light.

4. The touch-sensing display device (10, 20, 30, 40, 50, 60) according to any one of claims 1 to 3, wherein the touch-sensing light source (200, 210, 220, 230, 240, 250) is disposed in front of the display surface (S1) and emits the touch-sensing light (L1) toward the display surface (S1) to form the uniformed light field (LF) at the display surface (S1).

5. The touch-sensing display device (10, 20, 30, 40, 50, 60) according to claim 4, wherein the touch-sensing light source (200, 210, 220, 230, 240, 250) comprises at least two light emitting diodes surrounding the touch-sensing panel (100, 102, 104, 106, 108).

6. The touch-sensing display device (10, 20, 30, 40, 50, 60) according to claim 4, wherein the touch-sensing light source (200, 210, 220, 230, 240, 250) comprises a laser light source (222) and a lens (224) in front of the laser light source (222) and the touch-sensing light source (200, 210, 220, 230, 240, 250) is capable of providing the touch-sensing light (L1) with a shape of a curtain substantially parallel to the display surface (S1).

7. The touch-sensing display device (10, 20, 30, 40, 50, 60) according to any one of claims 1 to 4, wherein the touch-sensing light source (200, 210, 220, 230, 240, 250) comprises a light emitting source (232, 242) and a light guide (234), the light emitting source (232, 242) is located beside the light guide (234) and emits the touch-sensing light (L1), and the touch-sensing light (L1) is substantially transmitted inside the light guide (234) by a total inner reflection effect of the light guide (234) to form the uniform light field (LF).

8. The touch-sensing display device (10, 20, 30, 40, 50, 60) according to any one of claims 1 to 4, wherein the touch-sensing light source (200, 210, 220, 230, 240, 250) comprises a light emitting source (232, 242) and a light diffuser (244), the light emitting source (232,242) is located beside the light diffuser (244) and emits the touch-sensing light (L1) toward the light diffuser (244), and the touch-sensing light (L1) is substantially scattered outward from the light diffuser (244) to form the uniform light field (LF).

9. The touch-sensing display device (10, 20, 30, 40, 50, 60) according to any one of claims 1 to 4, wherein the touch-sensing light source (200, 210, 220, 230, 240, 250) is disposed beside the display medium (100B, 102D) and emits the touch-sensing light (L1) toward the display medium (100B, 102D) to form the uniformed light field (LF).

10. The touch-sensing display device (10, 20, 30, 40, 50, 60) according to any one of claims 1 to 9, wherein the touch-sensing panel (100, 102, 104, 106, 108) further comprises a filter layer (102F, 104F, 106F, 108F) and the display medium (100B, 102D) is disposed between the filter layer (102F, 104F, 106F, 108F) and the pixel array (100A, 102C).

11. The touch-sensing display device (10, 20, 30, 40, 50, 60) according to claim 10, wherein the filter layer (102F, 104F, 106F, 108F) comprises a red filter, a green filter, and a blue filter alternatively arranged above the pixel array.

12. The touch-sensing display device (10, 20, 30, 40, 50, 60) according to claim 11, wherein at least one of the red filter, the green filter, and the blue filter is further located above the sensing element (SR).

13. The touch-sensing display device (10, 20, 30, 40, 50, 60) according to claim 10, wherein the filter layer (102F, 104F, 106F, 108F) comprises a filter (104F₁, 106F₁, 106F₂, 108F_{1,} 108F₂, 108F₃) capable of blocking the visible light located above the sensing surface of the sensing element (SR).

14. The touch-sensing display device (10, 20, 30, 40, 50, 60) according to any one of claims 1 to 9, wherein the touch-sensing panel (100, 102, 104, 106, 108) further comprises a black matrix (104F₁, 106F₁, 106F₂, 108F₁, 108F₂, 108F₃) located above the sensing surface of the sensing element (SR).

15. The touch-sensing display device (10, 20, 30, 40, 50, 60) according to claim 14, wherein the black matrix (104F₁) is capable of allowing only near infra-red to pass through.
